# EUROPEAN PATENT SPECIFICATION

(11) **EP 3 114 929 B1**
(45) Date of publication and mention of the grant of the patent: **16.06.2021**
(21) Application number: 15758019.2
(22) Date of filing: 24.02.2015
(51) Int. Cl.: A01M 7/00, A01N 25/00, A01N 25/06, A01N 53/06, A01P 7/04, B65D 83/00, B05B 9/04

(54) **MOSQUITO CONTROL AEROSOL AND MOSQUITO CONTROL METHOD**
MÜCKENBEKÄMPFUNGSAEROSOL UND MÜCKENBEKÄMPFUNGSVERFAHREN
AÉROSOL POUR LUTTER CONTRE LES MOUSTIQUES ET PROCÉDÉ DE LUTTE CONTRE LES MOUSTIQUES

(30) Priority: 04.03.2014 JP 2014041857; 04.03.2014 JP 2014041858
(43) Date of publication of application: 11.01.2017
(73) Proprietor: DAINIHON JOCHUGIKU CO., LTD., Osaka-shi Osaka 550-0001 (JP)
(72) Inventor: NOTOMI Ayako, Toyonaka-shi Osaka 561-0827 (JP); YOSHINAKA Hiroko, Toyonaka-shi Osaka 561-0827 (JP); KOBAYASHI Yoko, Toyonaka-shi Osaka 561-0827 (JP); TANAKA Osamu, Toyonaka-shi Osaka 561-0827 (JP); KAWAJIRI Yumi, Toyonaka-shi Osaka 561-0827 (JP); NAKAYAMA Koji, Toyonaka-shi Osaka 561-0827 (JP)
(74) Representative: Cabinet Beau de Loménie
(86) International application number: PCT/JP2015/055132
(87) International publication number: WO 2015/133318

(56) References cited:
- JP-A- 2010 280 633
- JP-A- 2010 280 633
- JP-A- 2014 019 674
- JP-A- 2014 019 674

## Description

### TECHNICAL FIELD

The present invention relates to a mosquito control aerosol which includes: a pressure-resistant container equipped with a metering spray valve, that contains a liquid aerosol-forming material including an insect pest control component and an organic solvent, and a propellant; and a spray button having a spray outlet connected to the metering spray valve. The present invention also relates to a mosquito control method using the mosquito control aerosol.

### BACKGROUND ART

There are techniques of getting rid of flying insect pests: e.g., vaporizing and diffusing a chemical including an insecticidal component from a carrier impregnated with the chemical into a treatment space; directly spraying the chemical to flying insect pests; previously spraying the chemical to a place where flying insect pests are likely to come; etc. In this regard, aerosol insecticides including an insecticidal component have been developed as products for getting rid of flying insect pests entering houses. The aerosol insecticide can be used to easily spray the insecticidal component into a treatment space, and therefore, is widely used as a convenient product.

A conventional aerosol insecticide reduces a decrease in the proportion of the chemical remaining in the air in a room (see, for example, Patent Literature 1). According to Patent Literature 1, after the chemical is released, the chemical is caused to remain in the air so that the decrease in the concentration of the chemical in the air is reduced, whereby the sufficient effect of getting rid of mosquitoes hiding behind something can be sustained.

Another aerosol insecticide has a particle size larger than that of Patent Literature 1 when the chemical is sprayed into a room (see, for example, Patent Literature 2). The aerosol insecticide of Patent Literature 2 is based on the same principle as that of Patent Literature 1, i.e., that the effect of killing mosquitoes is improved by allowing the chemical to remain in the air in a room for as long as possible.

On the other hand, an aerosol insecticide may be caused to adhere to surfaces of objects or fixtures and fittings in a room of a house in order to get rid of flying insect pests in the room (see, for example, Patent Literature 3). According to Patent Literature 3, a particular chemical compound caused to adhere to objects etc. in a room evaporates and diffuses into the room. Therefore, flying insect pests in a house can be efficiently got rid of using a simple means without the necessity of repeated spraying or continual operation of electrical equipment etc.

### CITATION LIST

### PATENT LITERATURE

Patent Literature 1: Japanese Unexamined Patent Application Publication No. 2001-17055
Patent Literature 2: Japanese Unexamined Patent Application Publication No. 2013-99336
Patent Literature 3: Japanese Unexamined Patent Application Publication No. 2001-328913

JP2010280633 discloses a pest control method.

JP2014019674 discloses a flying insect pest control method.

### SUMMARY OF INVENTION

### TECHNICAL PROBLEM

According to the aerosol insecticide of Patent Literature 1, an attempt has been made to increase the duration for which the chemical remains in the air by adjusting the particle size of the chemical diffused in a room, whereby the chemical lasts for a longer period of time. However, the proportion of chemical particles remaining in the air after 12 hours or more from the start of the process is 0.5% or more. The duration of the aerosol insecticide of Patent Literature 1, which is intended to maintain the proportion of the chemical remaining in the air, is limited. Also, in Patent Literature 2, the proportion of chemical particles remaining in the air is similar to that of Patent Literature 1. The aerosol insecticide of Patent Literature 2 cannot be expected to remain in the air for a long period of time.

Of mosquitoes to be controlled (it is herein assumed that the mosquitoes include not only mosquitoes of the Culicidae, such as Culex pipiens, Aedes albopictus, etc., but also Chironomidae, Psychodidae, etc. of the suborder Nematocera), particularly Culex pipiens and Aedes albopictus not only suck blood but also transmit infectious disease. It is necessary to protect individuals against these mosquitoes. There is an increasing demand for establishment of a more effective technique of getting rid of these mosquitoes. Mosquitoes are flying insect pests which enter houses night and day. Therefore, ideally, the effect of an insecticide should be sustained all day, i.e., for a 24-hour period.

As described above, however, the effects of the aerosol insecticides of Patent Literatures 1 and 2 are sustained for as short as about 12 hours. In Patent Literatures 1 and 2, the chemical is actively caused to remain in the air by adjusting the particle size of the chemical. However, the presence of the chemical particles remaining in the air means that a human or pet in the treatment space may spend a long time in an environment in which they inhale the chemical. Therefore, the aerosol insecticides are not preferable in terms of influence on humans and pets.

The technique of getting rid of flying insect pests according to Patent Literature 3 is unclear as to whether or not the effect can be maintained stable over a long period of time. Chemical particles sprayed into the air may behave in the following ways: (A) remaining suspended in the air; (B) adhering to a floor or a wall; (C) after (B), vaporizing and/or diffusing again, or (D) decomposing and disappearing due to light etc. In this regard, the technique of Patent Literature 3 is categorized into (C). However, when the chemical adhering to objects etc. in a room vaporizes and/or diffuses into the air again, the vaporization and/or diffusion are easily affected by temperature, airflow, etc. Therefore, the technique of Patent Literature 3 does not always provide the stable effect of getting rid of flying insect pests.

With the above problems in mind, the present invention has been made. It is an object of the present invention to provide a mosquito control aerosol which can maintain the effect of significantly controlling flying insect pests, particularly mosquitoes, for a long period of time while reducing the influence on humans and pets, and a mosquito control method using the mosquito control aerosol.

### SOLUTION TO PROBLEM

To solve the object, a mosquito control aerosol according to the present invention, as defined in claim 1, is characterized in that it includes:
a pressure-resistant container equipped with a metering spray valve, the container containing a liquid aerosol-forming material including an insect pest control component and an organic solvent, and a propellant; and
a spray button having a spray outlet connected to the metering spray valve,
wherein
the volume of the liquid aerosol-forming material sprayed when the spray button is pressed down once is adjusted to 0.1 to 0.2 mL, and the spray force thereof as measured at a distance of 20 cm from the spray outlet at 25°C is adjusted to 0.8 to 5.0 g·f, i.e 7.85 x 10⁻³ to 4.90 x 10⁻² N, and
at least a portion of the liquid aerosol-forming material is sprayed from the spray outlet in the form of adhesive particles which adhere to an exposed portion in a treatment space.

As described in the above section "TECHNICAL PROBLEM," conventional aerosol insecticides have been developed in order to actively diffuse chemical particles into a treatment space and allow the chemical particles to remain in the air for as long as possible. However, when the chemical particles suspended in the treatment space remain for a long period of time, a human or pet which enters the treatment space is likely to inhale the chemical particles, leading to a risk of health problems.

Incidentally, the present inventors' study has found that, for mosquitoes typified by Culicidae (hereinafter simply referred to as "mosquitoes"), the period of time for which the insect is sitting on a wall surface etc. is longer than the period of time for which the insect is flying. In other words, most of mosquitoes which have entered a house are sitting on a wall surface etc. to wait for a chance to suck blood from a human. Therefore, the conventional technique of causing the chemical particles to be suspended in a treatment space for a longer period of time, produces the effect of controlling flying mosquitoes to some degree. However, the effect of the chemical cannot sufficiently affect mosquitoes sitting on a wall surface etc. As a result, mosquitoes cannot be completely controlled. The present inventors have conceived based on the above study result that, by increasing the effect of controlling mosquitoes sitting on a wall surface etc., the control of all mosquitoes entering a house can be improved while reducing inhalation of the chemical by a human or pet.

Therefore, in the mosquito control aerosol of the present invention, at least a portion of the liquid aerosol-forming material sprayed into a treatment space is in the form of adhesive particles which adhere to an exposed portion in the treatment space (e.g., a floor surface or a wall surface, a surface of an object, such as furniture etc., in the treatment space). Therefore, mosquitoes sitting on the exposed portion and mosquitoes flying in the treatment space can both be effectively knocked down or killed, whereby the effect of controlling all mosquitoes can be improved. Also, even if particles other than the adhesive particles (referred to as "suspendable particles") diffuse throughout the treatment space, the concentration of the liquid aerosol-forming material in the treatment space is reduced by an amount corresponding to the amount of the adhesive particles. Therefore, the amount of the liquid aerosol-forming material particles inhaled by a human or pet in the treatment space is considerably small, and therefore, the mosquito control aerosol is safer for humans and pets.

Also, in the mosquito control aerosol of the present invention, the volume of the liquid aerosol-forming material sprayed when the spray button is pressed down once is adjusted to 0.1 to 0.2 mL, and the spray force thereof as measured at a distance of 20 cm from the spray outlet at 25°C is adjusted to 0.8 to 5.0 g·f, i.e. 7.85 x 10⁻³ to 4.90 x 10⁻² N. The spray volume and spray force thus adjusted allow at least a portion of the sprayed liquid aerosol-forming material to be in the form of adhesive particles, resulting in a good control effect on mosquitoes.

To solve the object, a mosquito control aerosol according to the present invention is characterized in that it includes:
a pressure-resistant container equipped with a metering spray valve, the container containing a liquid aerosol-forming material including an insect pest control component and an organic solvent, and a propellant; and
a spray button having a spray outlet connected to the metering spray valve,
wherein
the volume of the liquid aerosol-forming material sprayed when the spray button is pressed down once is adjusted to 0.1 to 0.2 mL, and the spray force thereof as measured at a distance of 20 cm from the spray outlet at 25°C is adjusted to 0.8 to 5.0 g·f, i.e. 7.85 x 10⁻³ to 4.90 x 10⁻² N, and
the liquid aerosol-forming material is sprayed from the spray outlet in the form of adhesive particles which adhere to an exposed portion in a treatment space and suspendable particles which suspend in the treatment space.

In the mosquito control aerosol of the present invention, the liquid aerosol-forming material sprayed into a treatment space is in the form of two types of particles: adhesive particles which adhere to an exposed portion in the treatment space (e.g., a floor surface or a wall surface, a surface of an object, such as furniture etc., in the treatment space); and suspendable particles which are suspended in the treatment space. In other words, the two types of liquid aerosol-forming material particles sprayed in the treatment space have their respective roles, whereby the effect of controlling the insects can be efficiently achieved at optimum places in the treatment space. Therefore, mosquitoes sitting on the exposed portion and mosquitoes flying in the treatment space can both be effectively knocked down or killed, whereby the effect of controlling all mosquitoes can be improved. Also, the liquid aerosol-forming material sprayed into the treatment space is in the form of either adhesive particles or suspendable particles. As a result, even if the suspendable particles diffuse throughout the treatment space, not all the liquid aerosol-forming material is in the form of suspendable particles and diffused in the treatment space. Therefore, the concentration of the liquid aerosol-forming material in the treatment space is reduced by an amount corresponding to the amount of the adhesive particles. Therefore, the amount of the liquid aerosol-forming material particles inhaled by a human or pet in the treatment space is considerably small, and therefore, the mosquito control aerosol is safer for humans and pets.

Also, in the mosquito control aerosol of the present invention, the volume of the liquid aerosol-forming material sprayed when the spray button is pressed down once is adjusted to 0.1 to 0.2 mL, and the spray force thereof as measured at a distance of 20 cm from the spray outlet at 25°C is adjusted to 0.8 to 5.0 g·f, i.e. 7.85 x 10⁻³ to 4.90 x 10⁻² N. The spray volume and spray force thus adjusted allow the sprayed liquid aerosol-forming material to be in the form of adhesive particles and suspendable particles, resulting in a good control effect on mosquitoes.

In the mosquito control aerosol of the present invention, the adhesive particle preferably has a particle size of 20 to 80 µm as measured at a distance of 15 cm from the spray outlet at 25°C, where the particle size is the d90 particle size (90% particle size) in the volume cumulative distribution.

According to the mosquito control aerosol having this feature, by adjusting the adhesive particle to the above optimum range, mosquitoes sitting on an exposed portion can be reliably knocked down or killed by the insect pest control component of the adhesive particle.

In the mosquito control aerosol of the present invention, the amount of the adhering adhesive particles is 0.01 to 0.4 mg per square meter of an exposed portion in a treatment space.

According to the mosquito control aerosol having this feature, by adjusting the amount of the adhering adhesive particles to the above optimum range, mosquitoes sitting on an exposed portion can be reliably knocked down or killed by the insect pest control component of the adhesive particle.

In the mosquito control aerosol of the present invention, the suspendable particle preferably has a particle size of less than 20 µm as measured at a distance of 15 cm from the spray outlet at 25°C, where the particle size is the d90 particle size in the volume cumulative distribution.

According to the mosquito control aerosol having this feature, by adjusting the suspendable particle to the above optimum range, mosquitoes flying in the treatment space can be knocked down or killed by the insect pest control component of the suspendable particle.

In the mosquito control aerosol of the present invention, the volume ratio (a/b) of the liquid aerosol-forming material (a) and the propellant (b) placed in the pressure-resistant container is preferably 10/90 to 50/50.

According to the mosquito control aerosol having this feature, when the volume ratio (a/b) of the liquid aerosol-forming material (a) to the propellant (b) is within the above range, the adhesive particles formed from the sprayed liquid aerosol-forming material are in their optimum state. Also, an optimum balance is achieved between the adhesive particles and the suspendable particles. As a result, the adhesive particle can realiably reach the exposed portion in the treatment space, and the suspendable particle can be suspended in the treatment space in an amount which does not affect humans or pets. Thus, the adhesive particle and the suspendable particle are in their respective optimum states, and play their respective roles in providing the effect of the insect pest control component as much as possible.

In the mosquito control aerosol of the present invention, the organic solvent is preferably at least one selected from the group consisting of higher fatty acid esters and alcohols.

According to the mosquito control aerosol having this feature, the organic solvent is at least one selected from the group consisting of higher fatty acid esters and alcohols. By using such an organic solvent, the effect of each component can be efficiently achieved. Also, when the liquid aerosol-forming material is sprayed, adhesive particles and suspendable particles can be formed in balanced amounts, resulting in a stable control effect on mosquitoes.

In the mosquito control aerosol of the present invention, the insect pest control component preferably has a vapor pressure of 2 × 10⁻⁴ to 1 × 10⁻² mmHg at 30°C.

According to the mosquito control aerosol having this feature, as the insect pest control component, one which has a vapor pressure of 2 × 10⁻⁴ to 1 × 10⁻² mmHg at 30°C is employed. If such an insect pest control component is employed, then when the liquid aerosol-forming material is sprayed, adhesive particles can be formed in their optimum state. Also, adhesive particles and suspendable particles can be formed in balanced amounts, be in their respective optimum states, and play their respective roles in providing the effect of the insect pest control component. Also, when the insect pest control component is formulated together with other components and the above organic solvent and propellant, an effective mosquito control aerosol can be achieved.

In the mosquito control aerosol of the present invention, when the liquid aerosol-forming material is sprayed into a treatment space once, an effect of the insect pest control component is preferably sustained for 20 hours or more in a space of 33 m³ or less.

In the methods for getting rid of mosquitoes using an aerosol insecticide, that are disclosed in Patent Literatures 1 and 2, the chemical is sustained for 12 hours. However, in the mosquito control aerosol of the present invention, when the liquid aerosol-forming material is sprayed into a treatment space only once, the insect pest control effect can be sustained for 20 hours or more, i.e., substantially all day, in a space of 33 m³ or less.

In the mosquito control aerosol of the present invention, when the liquid aerosol-forming material is sprayed into a treatment space once, the proportion of the insect pest control component remaining in the air two hours after the spraying is preferably 0.05 to 5%.

According to the mosquito control aerosol having this feature, when the liquid aerosol-forming material is sprayed into a treatment space once, the proportion of the insect pest control component remaining in the air (in the treatment space) two hours after the spraying is adjusted to 0.05 to 5%. Within such a range, the insect pest control component of the suspendable particle can be effectively vaporized and/or diffused in the treatment space. Although the suspendable particle remains in the air even after two hours has passed, the concentration of the remaining suspendable particle is maintained low. Therefore, the risk of affecting humans and pets is significantly reduced while keeping the effect of knocking down or killing mosquitoes flying in the treatment space, resulting in safe use.

In the mosquito control aerosol of the present invention, the spray outlet preferably has an inner diameter of 0.2 to 1.0 mm.

According to the mosquito control aerosol having this feature, the inner diameter is set to be within the above optimum range. Therefore, the particle size and spray force of the liquid aerosol-forming material can be suitably adjusted, and adhesive particles can be formed in their optimum state, resulting in providing the effect of the insect pest control component. Also, adhesive particles and suspendable particles can be formed in balanced amounts. As a result, the adhesive and suspendable particles can be in their optimum states in the treatment space, and play their respective roles in providing the effect of the insect pest control component.

To solve the above object, a mosquito control method according to the present invention is characterized in that it includes:
using any one of the above mosquito control aerosols to spray the liquid aerosol-forming material into a treatment space to knock down or kill mosquitoes.

The mosquito control method of this feature is performed using the mosquito control aerosol of the present invention, and therefore, a good mosquito control effect similar to that of the above mosquito control aerosol can be achieved.

In the mosquito control method of the present invention, the liquid aerosol-forming material is preferably sprayed into the treatment space once every 24 hours.

In the mosquito control aerosol of the present invention, as described above, the insect pest control component is sustained for 20 hours or more, i.e., substantially a day. Therefore, the mosquito control aerosol can be used to spray the liquid aerosol-forming material into a treatment space once every 24 hours. By performing such a mosquito control method, the insect pest control effect can be sustained over living hours only by spraying once a day at a predetermined time every day.

### BRIEF DESCRIPTION OF DRAWINGS

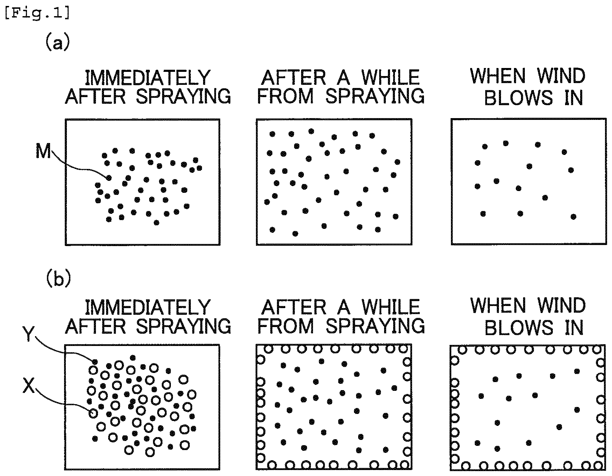

[FIG. 1] FIG. 1 is a model diagram showing behavior of particles of a liquid aerosol-forming material as the liquid aerosol-forming material is sprayed into a treatment space.

### DESCRIPTION OF EMBODIMENTS

A mosquito control aerosol according to the present invention includes: a pressure-resistant container equipped with a metering spray valve, that contains a liquid aerosol-forming material including an insect pest control component and an organic solvent, and a propellant; and a spray button having a spray outlet connected to the metering spray valve. The mosquito control aerosol of the present invention will now be described. Note that the present invention is not intended to be limited to configurations described in embodiments and drawings described below.

### <Liquid Aerosol-Forming Material>

### [Insect Pest Control Component]

The insect pest control component, which is one of the major components of the liquid aerosol-forming material, has a vapor pressure of 2 × 10⁻⁴ to 1 × 10⁻² mmHg at 30°C. As such an insect pest control component, metofluthrin, transfluthrin, etc. is preferably selected. These insect pest control components may be used alone or in combination. Note that the present invention also includes optical and geometric isomers based on asymmetric carbons of metofluthrin and transfluthrin.

The amount of the insect pest control component included in the liquid aerosol-forming material is preferably 1.0 to 50% by weight, taking it into consideration that the liquid aerosol-forming material is dissolved in an organic solvent before being sprayed into a treatment space. Within such a range, the insect pest control component is easily dissolved in the organic solvent, and when the liquid aerosol-forming material is sprayed, adhesive particles are easily formed from at least a portion of the liquid aerosol-forming material, and other particles are easily formed as suspendable particles in addition to the adhesive particles (the adhesive and suspendable particles will be described below in detail) . If the amount of the insect pest control component included in the liquid aerosol-forming material is less than 1.0% by weight, the effect of the insect pest control component cannot be sufficiently provided, resulting in an insufficient effect of controlling mosquitoes. On the other hand, if the amount of the insect pest control component included in the liquid aerosol-forming material exceeds 50% by weight, the concentration of the insect pest control component is high, and therefore, it is difficult to appropriately formulate the liquid aerosol-forming material.

As described above, the insect pest control component contained in the mosquito control aerosol of the present invention is preferably one which has a vapor pressure of 2 × 10⁻⁴ to 1 × 10⁻² mmHg at 30°C (metofluthrin, transfluthrin, etc.). In addition to these components, the mosquito control aerosol of the present invention may contain pyrethroid compounds, such as profluthrin, empenthrin, etc., other pyrethroid compounds, such as phthalthrin, resmethrin, cyfluthrin, phenothrin, permethrin, cyphenothrin, cypermethrin, allethrin, prallethrin, furamethrin, imiprothrin, etofenprox, etc., silicon-based compounds, such as silafluofen etc., organic phosphorus compounds, such as dichlorvos, fenitrothion, etc., carbamate compounds, such as propoxur etc., etc.

The insect pest control component is adjusted so that when the liquid aerosol-forming material is sprayed into a treatment space once, the proportion of the insect pest control component remaining in the air (treatment space) after two hours have passed is 0.05 to 5%. The proportion remaining in the air is represented by the proportion of the number of particles present in a treatment space after a predetermined period of time has passed (Q) to the number of particles present in the treatment space immediately after spraying (P), i.e., Q/P × 100(%), this can be easily calculated based on the theoretical concentration of the insect pest control component in the air, and the concentration of the insect pest control component in the air after a predetermined period of time has passed, as described in examples below. The amount of the insect pest control component sprayed in this case is adjusted to 5.0 to 30 mg per 4.5 to 8 Jyos (Jyo is a Japanese unit of area: 1 Jyo is equal to about 1.8 m²) (about 18.5 to 33.0 m³). Within such a range, adhesive particles are formed in their optimum state from the liquid aerosol-forming material, and can provide the insect pest control effect. Also, when both adhesive particles and suspendable particles are formed, the adhesive particles and suspendable particles are provided in balanced amounts to be in their respective optimum states and play their respective roles in providing the insect pest control effect. Although the proportion remaining is relatively low as described above, mosquitoes can be effectively knocked down or killed. Moreover, even when a human or pet in the treatment space inhales the insect pest control component, the human or pet is not likely to be affected by the insect pest control component, and therefore, the mosquito control aerosol of the present invention can be safely used.

### [Organic Solvent]

The organic solvent, which is another of the major components of the liquid aerosol-forming material, allows the insect pest control component to be dissolved therein to formulate the liquid aerosol-forming material, and allows the formulated liquid aerosol-forming material to form optimum particles when the formulated liquid aerosol-forming material is sprayed into a treatment space. Preferable examples of the organic solvent include higher fatty acid esters and alcohols. The higher fatty acid ester preferably has 16 to 20 carbon atoms in total. Examples of such a higher fatty acid ester include isopropyl myristate, butyl myristate, hexyl laurate, isopropyl palmitate, etc. Of these esters, isopropyl myristate is particularly preferable. The alcohol is preferably a lower alcohol having 2 or 3 carbon atoms. The organic solvent may be mixed with, for example, hydrocarbon solvents, such as n-paraffin, isoparaffin, etc., glycol ethers and ketone solvents having 3 to 6 carbon atoms, etc.

### [Other Components]

The mosquito control aerosol of the present invention may be suitably mixed with, in addition to the above components, acaricides, fungicides against molds, fungi, etc., antimicrobial agents, bactericides, aroma agents, air fresheners, stabilizers, antistatic agents, defoamers, excipients, etc. Examples of the acaricide include 5-chloro-2-trifluoromethane sulfonamide methyl benzoate, phenyl salicylate, 3-iodo-2-propynylbutyl carbamate, etc. Examples of the fungicide, antimicrobial agent, and bactericide include hinokitiol, 2-mercaptobenzothiazole, 2-(4-thiazolyl) benzimidazole, 5-chloro-2-methyl-4-isothiazoline-3-one, triforine, 3-methyl-4-isopropylphenol, ortho-phenylphenol, etc. Examples of the aroma agent include aroma components, such as orange oil, lemon oil, lavender oil, peppermint oil, eucalyptus oil, citronella oil, lime oil, yuzu oil, jasmine oil, cypress oil, green tea essential oil, limonene, α-pinene, linalool, geraniol, phenylethyl alcohol, amylcinnamic aldehyde, cuminaldehyde, benzyl acetate, etc., perfume components mixed with a leaf alcohol or leaf aldehyde called "fragrance of green," etc.

### <Propellant>

Examples of the propellant used in the mosquito control aerosol of the present invention include liquefied petroleum gas (LPG), dimethyl ether (DME), nitrogen gas, carbonic acid gas, nitrous oxide, compressed air, etc. These propellants may be used alone or in combination. It is easy to use the mosquito control aerosol of the present invention containing LPG as a major component.

In the mosquito control aerosol of the present invention, the volume ratio (a/b) of the liquid aerosol-forming material (a) to the propellant (b) is adjusted to 10/90 to 50/50. Within such a range, adhesive particles are formed from at least a portion of the liquid aerosol-forming material. As a result, the adhesive particle can reliably reach an exposed portion in a treatment space, while the suspendable particle can be suspended in a treatment space in an amount in which the suspendable particle does not affect humans or pets. Thus, the adhesive particles are in their optimum state, and can provide the insect pest control effect as much as possible. When both adhesive particles and suspendable particles are formed, an optimum balance is achieved therebetween. As a result, the adhesive particle can reliably reach an exposed portion in a treatment space, while the suspendable particle can be suspended in a treatment space in an amount in which the suspendable particle does not affect humans or pets. Thus, the adhesive particle and the suspendable particle are in their respective optimum states, and play their respective roles in providing the insect pest control effect as much as possible. If the proportion of the propellant (b) is increased to decrease the volume ratio (a/b) from 10/90, i.e., the amount of the propellant contained in the pressure-resistant container is increased, the sprayed liquid aerosol-forming material is atomized to an unnecessarily small size, so that the number of the adhesive particles is reduced. As a result, there is not enough of the adhesive particles adhering to an exposed portion in a treatment space, and therefore, mosquitoes sitting on the exposed portion may not be reliably controlled. On the other hand, if the proportion of the propellant (b) is decreased to increase the volume ratio (a/b) from 50/50, i.e., the amount of the propellant contained in the pressure-resistant container is decreased, it is difficult for the sprayed liquid aerosol-forming material to form adhesive particles and suspendable particles having particle sizes falling within the above optimum ranges, and therefore, the liquid aerosol-forming material quickly settles after being sprayed. Therefore, the adhesive particle adhering to the exposed portion in the treatment space and the suspendable particle suspended in the treatment space are both quantitatively insufficient, and therefore, it is difficult to quickly knock down or kill mosquitoes.

### <Mosquito Control Aerosol>

As described above, the insect pest control component, the organic solvent, the propellant, and other optional components to be mixed, are selected, and then placed in a pressure-resistant container, to produce an aerosol product. This aerosol product is the mosquito control aerosol of the present invention, which is used to spray the liquid aerosol-forming material into a treatment space. The liquid aerosol-forming material mainly includes the insect pest control component and the organic solvent. Although, strictly speaking, the liquid aerosol-forming material is separate from the propellant, the liquid aerosol-forming material is released from the pressure-resistant container together with the propellant, and therefore, in the description that follows, the contents of the aerosol including the liquid aerosol-forming material and the propellant may be collectively referred to as "the liquid aerosol-forming material." Here, the spray valve included in the mosquito control aerosol of the present invention will be described. The mosquito control aerosol of the present invention mainly includes a pressure-resistant container (aerosol container), a metering spray valve, and a spray button. The spray button, which is an actuator for spraying the liquid aerosol-forming material, is connected to the metering spray valve. The spray button has a spray outlet through which the liquid aerosol-forming material is sprayed out of the aerosol container (into a treatment space).

When the spray button of the mosquito control aerosol is pressed down once, the metering spray valve is actuated by the pressure of the propellant, the liquid aerosol-forming material is lifted to the spray outlet in the pressure-resistant container and then sprayed into a treatment space. In this case, the volume of the sprayed liquid aerosol-forming material is adjusted to 0.1 to 0.4 mL, more preferably 0.2 to 0.4 mL. Within such a range, adhesive particles are formed from at least a portion of the liquid aerosol-forming material. When both adhesive particles and suspendable particles are formed, the adhesive and suspendable particles are formed in balanced amounts to provide their respective optimum control effects in the treatment space. If the spray volume is less than 0.1 mL, the spray volume is excessively small, and therefore, there is not enough of the adhesive particles adhering to an exposed portion in the treatment space, so that it is difficult to knock down or kill mosquitoes sitting on the exposed portion. Also, there is not enough of the suspendable particles, so that it is difficult to knock down or kill mosquitoes flying in the treatment space. On the other hand, if the spray volume exceeds 0.4 mL, an unnecessarily large amount of the liquid aerosol-forming material is released to the treatment space, so that it is difficult to allow humans or pets to enter the treatment space. Also, the amount of the liquid aerosol-forming material which is used is excessively large, resulting in economic disadvantage.

The mosquito control aerosol is adjusted to have a spray force of 0.8 to 5.0 g·f, i.e. 7.85 × 10⁻³ to 4.90 × 10⁻² N as measured at a distance of 20 cm from the spray outlet at 25°C. Within such a range, by spraying the liquid aerosol-forming material once, adhesive particles formed from the liquid aerosol-forming material are allowed to smoothly reach an exposed portion in a treatment space, whereby the effect of the insect pest control component is achieved. Moreover, the spray outlet preferably has an inner diameter of 0.2 to 1.0 mm. Within such a range, the particle size and the spray force can be suitably adjusted so that adhesive particles can be optimally formed from at least a portion of the liquid aerosol-forming material sprayed into a treatment space, and therefore, the insect pest control effect can be achieved, whereby mosquitoes in the treatment space can be reliably knocked down or killed.

FIG. 1 is a model diagram showing behavior of particles of the liquid aerosol-forming material as the liquid aerosol-forming material is sprayed into a treatment space. FIG. 1(a) is a model diagram showing a case where a conventional mosquito control aerosol is sprayed into a treatment space. FIG. 1(b) is a model diagram showing a case where the mosquito control aerosol of the present invention is sprayed into a treatment space.

As shown in FIG. 1(a), in the case of the conventional mosquito control aerosol product (hereinafter simply referred to as "the conventional product"), when the liquid aerosol-forming material is sprayed into a treatment space, particles M thereof having a particle size of less than 20 µm are diffused in the treatment space. After a while from the spraying, the particles M are further diffused in the entire treatment space, so that the insect pest control component is vaporized and/or diffused. As a result, mosquitoes flying in the treatment space can be knocked down or killed. As described above, however, the period of time for which mosquitoes are sitting on an exposed portion in a treatment space is longer than the period of time for which mosquitoes are flying. Therefore, the conventional product cannot reliably knock down or kill mosquitoes which are sitting on an exposed portion in a treatment space. Also, if, for example, a window of a treatment space is opened, so that wind blows into the treatment space, a portion of the particles M suspended in the treatment space are caused by the wind to flow, and therefore, the effect of the insect pest control component is significantly reduced. Moreover, if the period of time for which the particles M are suspended in a treatment space is long, a human or pet in the treatment space inhales an increased amount of the particles M, and is likely to be adversely affected.

Under these circumstances, the present inventors have extensively studied to develop a mosquito control aerosol product which solves the above problems. Adhesive particles and suspendable particles which are characteristic features of the mosquito control aerosol product of the present invention will now be described.

### [Adhesive Particle]

As shown in FIG. 1(b), when the liquid aerosol-forming material is sprayed into a treatment space once, adhesive particles X and suspendable particles Y are formed. In FIG. 1(b), the adhesive particles X are represented by open circles, and the suspendable particles Y are represented by closed circles. The adhesive and suspendable particles X and Y have different particle sizes. The particle size of the adhesive particle X is larger than the particle size of the suspendable particle Y. The adhesive particle X preferably has a particle size of 20 to 80 µm as measured at a distance of 15 cm from the spray outlet at 25°C, where the particle size is the d90 particle size in the volume cumulative distribution. Within such a range, when the liquid aerosol-forming material is sprayed into a treatment space, the adhesive particle X can be quickly moved to adhere to an exposed portion in the treatment space. Therefore, mosquitoes sitting on the exposed portion can be knocked down or killed by the insect pest control component of the adhesive particle X. The insect pest control effect is also effective to mosquitoes which have entered the treatment space and are trying to sit on the exposed portion, and therefore, the mosquitoes can be driven out of the treatment space. If the particle size is less than 20 µm, the particle size is excessively small, so that it is difficult for the adhesive particle X to reach the exposed portion, and as a result, it is difficult to control mosquitoes which are sitting or are trying to sit on the exposed portion. On the other hand, if the particle size exceeds 80 µm, the particle size is excessively large, so that it is difficult to control behavior of the adhesive particle, and therefore, it is difficult for the adhesive particle to suitably adhere to the exposed portion. The adhesive particle X more preferably has a particle size of 25 to 70 µm as measured at a distance of 15 cm from the spray outlet at 25°C, where the particle size is the d90 particle size in the volume cumulative distribution.

The amount of the adhering adhesive particle X is preferably 0.01 to 0.4 mg per square meter of an exposed portion in a treatment space, more preferably 0.05 to 0.2 mg per square meter. Within such a range, mosquitoes sitting on the exposed portion can be effectively knocked down or killed. If the amount of the adhering adhesive particle X is less than 0.01 mg per square meter, the insect pest control effect is not sufficient for mosquitoes sitting on the exposed portion, i.e., it is difficult to knock down or kill mosquitoes. On the other hand, if the amount of the adhering adhesive particle X exceeds 0.4 mg per square meter, the insect pest control effect is not significantly improved, and the amount of the liquid aerosol-forming material which is used is excessively large, resulting in economic disadvantage.

### [Suspendable Particle]

The suspendable particle Y preferably has a particle size of less than 20 µm as measured at a distance of 15 cm from the spray outlet at 25°C, where the particle size is the d90 particle size in the volume cumulative distribution. Within such a range, when the liquid aerosol-forming material is sprayed into a treatment space, the suspendable particle Y can be quickly diffused to be suspended in the treatment space. Therefore, mosquitoes flying in the treatment space can be knocked down or killed by the insect pest control component of the suspendable particle Y. The suspendable particle Y is also effective to mosquitoes which are trying to enter the treatment space, whereby entrance into the treatment space can be reduced. If the particle size of the suspendable particle Y is 20 µm or more, the suspendable particle Y functions as the adhesive particle X. Thus, by adjusting the particle size of a portion of the particles of the liquid aerosol-forming material to the above optimum range to form the suspendable particle Y, the suspendable particle Y has behavior different from that of the adhesive particle X. As a result, the suspendable particle Y can effectively knock down or kill mosquitoes together with the adhesive particle X.

As shown in FIG. 1(b), immediately after the liquid aerosol-forming material is sprayed into a treatment space once, the adhesive particle X quickly moves toward an exposed portion in the treatment space, and the suspendable particle Y begins diffusing into the entire treatment space. After a while from the spraying performed once, the adhesive particle X has completely adhered to the exposed portion, and maintains the adhesion. As described above, the adhesive particle X knocks down or kills mosquitoes sitting on the exposed portion using the insect pest control component. On the other hand, the suspendable particle Y progressively diffuses throughout the treatment space, and the insect pest control component is gradually vaporized and/or diffused, to knock down or kill mosquitoes flying in the treatment space. The suspendable particle Y also can prevent mosquitoes which are trying to enter the treatment space from entering the treatment space. Even if mosquitoes have successfully entered the treatment space, then when the mosquitoes sit on or approach an exposed portion in the treatment space, the mosquitoes can be reliably knocked down or killed by the insect pest control component of the adhesive particle X adhering the exposed portion. Thus, the mosquito control aerosol of the present invention forms two types of particles having different behaviors from the sprayed liquid aerosol-forming material, whereby the particles are allowed to be in the respective optimum states and play their respective roles in providing the insect pest control effect as much as possible. Therefore, the adhesive particle X and the suspendable particle Y can produce a significant control effect on both mosquitoes which have entered a treatment space and mosquitoes which are trying to enter a treatment space, to knock down or kill the mosquitoes.

When wind blows into a treatment space, then even if a portion of the suspendable particles Y are caused by the wind to flow, the adhesive particle X continues to be present on the exposed portion. As described above, most of mosquitoes in the treatment space are sitting on the exposed portion for a longer period of time. Therefore, if the adhesive particle X can produce the desired effect, then even if the amount of the suspendable particles Y is reduced, the effect of controlling mosquitoes is not deteriorated. Moreover, as with the conventional product, a portion of the particles formed from the liquid aerosol-forming material sprayed into a treatment space are the suspendable particles Y. Therefore, the concentration of the liquid aerosol-forming material (the suspendable particles Y) diffusing in the treatment space is reduced by an amount corresponding to the amount of the adhesive particles X, and therefore, is low compared to the conventional product. Therefore, the influence of inhalation of the suspendable particle Y on a human or pet is reduced, and therefore, the mosquito control aerosol of the present invention can be provided as a safe product.

When the liquid aerosol-forming material formulated as described above is sprayed into a treatment space once, the effect of the insect pest control component is sustained for 20 hours or more in a space of 33 m³ or less. The space of 33 m³ or less includes living spaces of 4.5 to 8 Jyo (a ceiling height of 2.5 m). Therefore, when the mosquito control aerosol of the present invention is used in typical living spaces of ordinary homes, the insect pest control effect can be sustained substantially all day. Mosquitoes enter houses night and day. In particular, it is necessary to prevent mosquitoes from sucking blood from a human or pet which is asleep. The mosquito control aerosol of the present invention can sustain the effect of the insect pest control component over 20 hours or more in a space of 33 m³ or less. Therefore, for example, if the mosquito control aerosol of the present invention is sprayed once before a human or pet goes to bed at night, the effect is sustained until the afternoon of the following day, and therefore, the human or pet can sleep with an easy mind.

### <Mosquito Control Method>

The mosquito control method of this configuration is performed using the above mosquito control aerosol. The mosquito control aerosol includes: a pressure-resistant container equipped with a metering spray valve, that contains a liquid aerosol-forming material including an insect pest control component and an organic solvent, and a propellant; and a spray button having a spray outlet connected to the metering spray valve. Initially, when the spray button is pressed once, the liquid aerosol-forming material is sprayed through the spray outlet into a treatment space (spraying step). At this time, as shown in FIG. 1(b), the adhesive particles X and the suspendable particles Y are formed from the liquid aerosol-forming material, and sprayed into the treatment space. The adhesive particle X adheres to an exposed portion in the treatment space, and the suspendable particle Y is suspended in the treatment space. The adhesive particle X knocks down or kills mosquitoes sitting on a wall surface, a floor surface, a surface of an object, etc. in the treatment space, or alternatively, is effective to mosquitoes trying to sit on these places, i.e., drives the mosquitoes out of the treatment space. On the other hand, the suspendable particle Y can knock down or kill mosquitoes flying in the treatment space, and is also effective to mosquitoes trying to enter the treatment space, i.e., reduces entrance into the treatment space. The above insect pest control effects of the adhesive particle X and the suspendable particle Y are sustained over as long as 20 hours or more in a space of 33 m³ or less. After a predetermined period of time has passed, the liquid aerosol-forming material may be sprayed into the treatment space again to knock down or kill mosquitoes.

The insect pest control component of the mosquito control aerosol of the present invention is sustained for 20 hours or more, i.e., substantially a day, in a space of 33 m³ or less. Therefore, in the mosquito control method performed using the mosquito control aerosol, the operation can be completed only by performing the spraying step once a day at a predetermined time every day. Thus, any one can easily spray the liquid aerosol-forming material into a treatment space, and can be prevented from missing the timing to spray.

### [Examples]

In order to test the mosquito control effect of the mosquito control aerosol of the present invention, a plurality of mosquito control aerosols (Examples 1 to 10) having the characteristic features of the present invention were prepared to conduct tests for the mosquito control effect. For comparison, mosquito control aerosols (Comparative Examples 1 and 2) which have none of the characteristic features of the present invention were prepared to conduct similar tests for the mosquito control effect.

The mosquito control aerosols of Examples 1 to 10 were formulated according to compositions and conditions shown in Table 1. Tests described below were conducted. The mosquito control aerosols of Comparative Examples 1 and 2 were also formulated according to compositions and conditions shown in Table 1. Tests similar to those for Examples 1 to 10 were conducted. The results of the tests are shown in Table 2.

### (1) Control Effect on Adult Mosquitoes in 25-m³ Room

The mosquito control aerosol was sprayed once diagonally upward at the center of a closed 25-m³ room. Immediately after that, 50 female adult Culex pipiens mosquitoes were released and then exposed for two hours before all of the sample mosquitoes were collected. Meanwhile, the number of adult Culex pipiens mosquitoes which fell down to be flat on their back as time passed was counted to calculate the KT₅₀ value. Thereafter, in the same room, a similar operation was performed 10 hours, 14 hours, and 20 hours after the mosquito control aerosol was sprayed once.

### (2) Proportion of Suspendable Particles Remaining in Air

The mosquito control aerosol was sprayed once diagonally upward toward the center of a closed 25-m³ room. An air collection tube (a glass tube filled with silica gel, with both ends thereof being plugged with absorbent cotton) was placed 50 cm back from the center of the room (at a distance of 130 cm from the wall surface) and 120 cm above the floor, and connected to a vacuum pump, to suck a predetermined amount of air two hours after the spraying. The air collection tube was washed with acetone. The amount of the collected insect pest control component was analyzed using gas chromatography (model no. GC1700, manufactured by Shimadzu Corporation). The concentration of the insect pest control component in the air was calculated based on the value obtained by the analysis. The ratio of this concentration to the theoretical concentration in the air was calculated as the proportion of the insect pest control component remaining in the air.

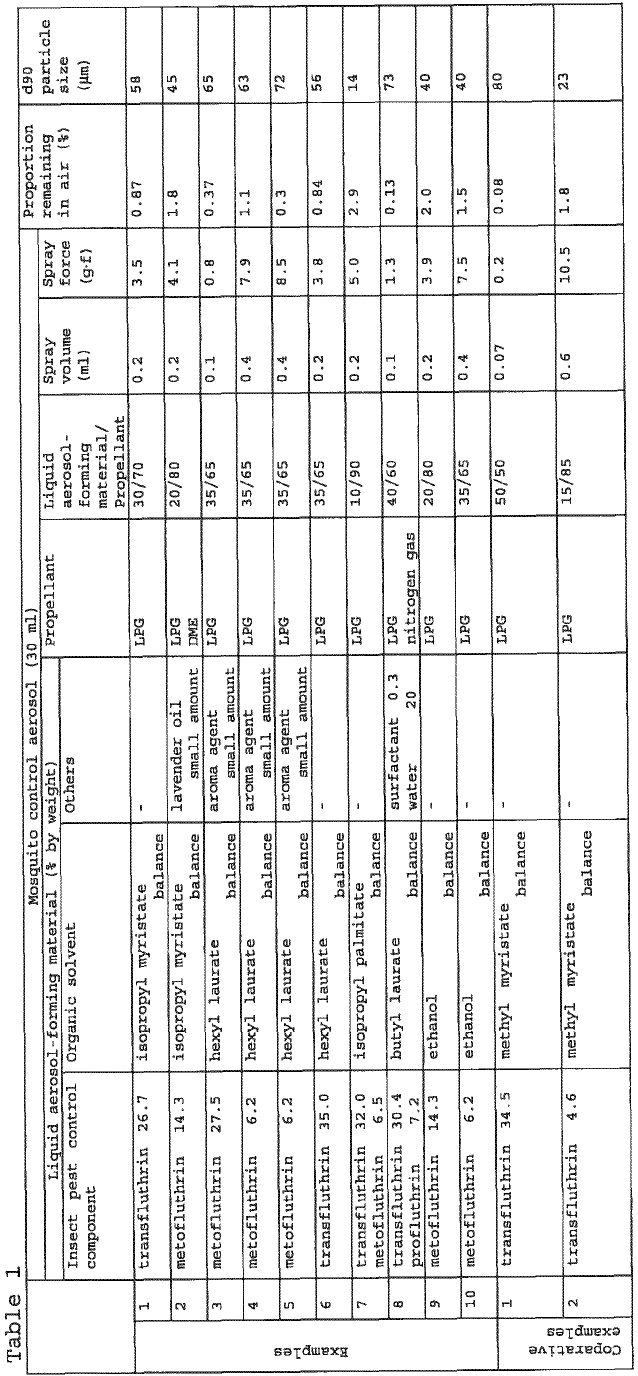

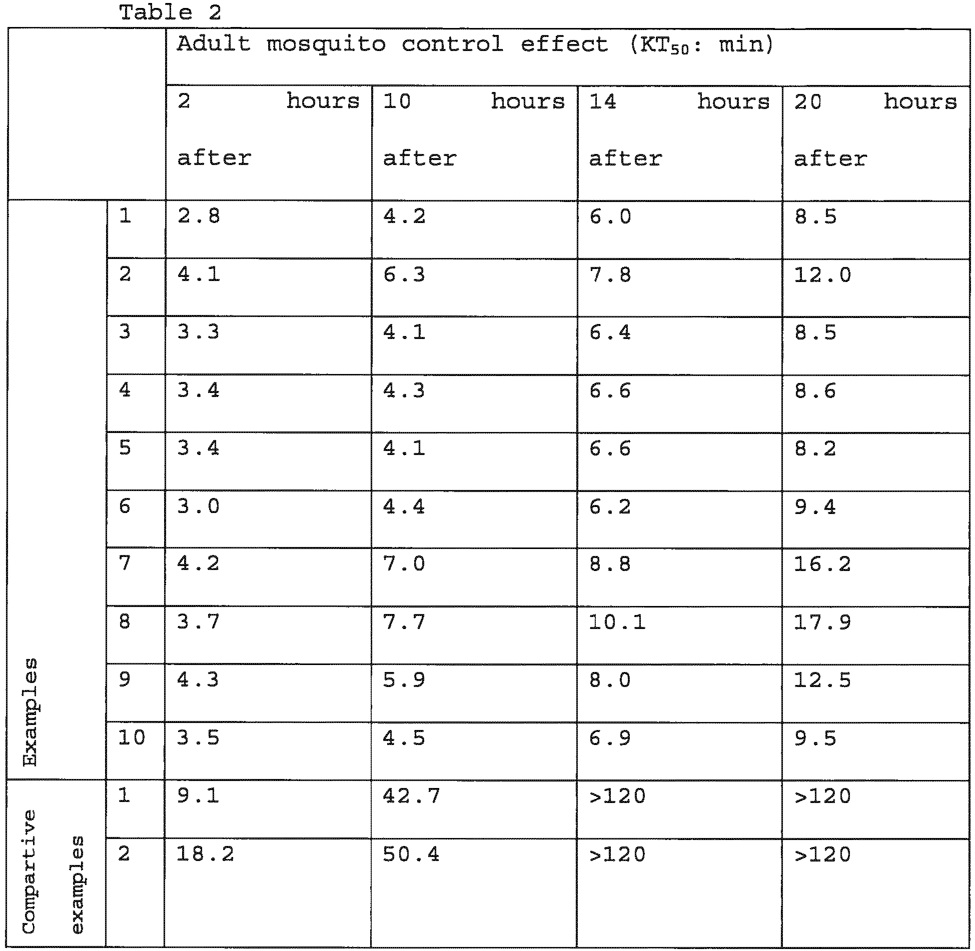

As can be seen from the results shown in Tables 1 and 2, when metofluthrin and/or transfluthrin were used as the insect pest control component (Examples 1 to 7, 9, and 10), the KT₅₀ value was maintained at a significant level to have a good control effect even 20 hours after the mosquito control aerosol was sprayed once. Also, when a small amount of profluthrin was added to transfluthrin (Example 8), a good control effect was obtained. As can also be seen, as the organic solvent combined with the insect pest control component, higher fatty acid esters having 16 to 20 carbon atoms in total, such as isopropyl myristate, and lower alcohols having about 2 to 3 carbon atoms, such as ethanol, are effective. On the other hand, in Comparative Examples 1 and 2, the KT₅₀ values were worse than those of the examples 10 hours after the mosquito control aerosol was sprayed once, and even worse 14 hours after the spraying. In all of the comparative examples, the effect of controlling female adult Culex pipiens was substantially lost 20 hours after the spraying.

Next, the mosquito control aerosol of the present invention was tested for the mosquito control effect on a mosquito different from that which was used in Examples 1 to 10. This test is Example 11.

In Example 11, metofluthrin as the insect pest control component was dissolved in isopropyl palmitate as the organic solvent to formulate the liquid aerosol-forming material containing 36.0% by weight of metofluthrin. In an aerosol container equipped with a metering spray valve, 4.0 mL of the liquid aerosol-forming material and 16.0 mL of liquefied petroleum gas as the propellant were loaded under pressure to obtain the mosquito control aerosol of the present invention. The volume ratio (a/b) of the liquid aerosol-forming material (a) to the propellant (b) was adjusted to 20/80. Thereafter, the mosquito control aerosol was used to spray 0.1 mL of the liquid aerosol-forming material slightly diagonally upward in substantially a closed 6-Jyo room having a ceiling height of 2.5 m (about 25 m³). At this time, the spray force (25°C) of the mosquito control aerosol as measured at a distance of 20 cm from the spray outlet was 1.4 g·f, i.e. 1,37.10⁻² N. Adhesive particles formed from the liquid aerosol-forming material had a particle size of 42 µm as measured at a distance of 15 cm from the spray outlet at 25°C, where the particle size is the d90 particle size in the volume cumulative distribution.

When Chironomidae midges were released in the room immediately after the mosquito control aerosol of Example 11 was sprayed, the Chironomidae midges were quickly knocked down or killed. The proportion of the insect pest control component (metofluthrin) remaining in the air was calculated using a technique similar to that of Examples 1 to 10 to be 0.93%.

As can be seen from the test results of Examples 1 to 11, according to the mosquito control aerosol of the present invention, and the mosquito control method using this, a good control effect on mosquitoes is sustained over 20 hours or more in a space of at least 25 m³ (corresponding to about 6 Jyo). Note that it was observed that the mosquito control effect of the mosquito control aerosol of the present invention is sustained over 20 hours or more even in a space having a volume of up to 33 m³ (corresponding to about 8 Jyo) in which the aerosol is used for treatment. Also, a similar test for the control effect was conducted with respect to flying insect pests in addition to mosquitoes. As a result, it was found that the effect of controlling flies of the suborder Brachycera is sustained over four hours or more in a space of 33 m³ or less, i.e., the present invention is highly practical. Moreover, it was also found that the present invention has a subsidiary effect that creeping insect pests, such as cockroaches, ants, deathwatch beetles, etc., are kept away.

### INDUSTRIAL APPLICABILITY

According to the present invention, a mosquito control aerosol having a significant effect of controlling mosquitoes, and a mosquito control method using this, can be provided.

### REFERENCE SIGNS LIST

- X: ADHESIVE PARTICLE
- Y: SUSPENDABLE PARTICLE

## Claims

1. A mosquito control aerosol comprising:
a pressure-resistant container equipped with a metering spray valve, the container containing a liquid aerosol-forming material including an insect pest control component and an organic solvent, and a propellant; and
a spray button having a spray outlet connected to the metering spray valve,
wherein
the volume of the liquid aerosol-forming material sprayed when the spray button is pressed down once is adjusted to 0.1 to 0.2 mL, and the spray force thereof as measured at a distance of 20 cm from the spray outlet at 25°C is adjusted to 7.85 X 10⁻³ to 4.90 X 10⁻² N (0.8 to 5.0 g.f), and
at least a portion of the liquid aerosol-forming material is sprayed from the spray outlet in the form of adhesive particles (X) which adhere to an exposed portion in a treatment space,
and the amount of the adhering adhesive particles (X) is 0.01 to 0.4 mg per square meter of an exposed portion in a treatment space.

2. A mosquito control aerosol of claim 1 **characterized in that**
the liquid aerosol-forming material is sprayed from the spray outlet in the form of adhesive particles (X) which adhere to an exposed portion in a treatment space and suspendable particles (Y) which suspend in the treatment space.

3. The mosquito control aerosol of claim 1 or 2, **characterized in that**
the adhesive particle (X) has a particle size of 20 to 80 µm as measured at a distance of 15 cm from the spray outlet at 25°C, where the particle size is the d90 particle size in the volume cumulative distribution.

4. The mosquito control aerosol of claims 2 or 3, **characterized in that**
the suspendable particle (Y) has a particle size of less than 20 µm as measured at a distance of 15 cm from the spray outlet at 25°C, where the particle size is the d90 particle size in the volume cumulative distribution.

5. The mosquito control aerosol of any one of claims 1 to 4, **characterized in that**
the volume ratio (a/b) of the liquid aerosol-forming material (a) and the propellant (b) placed in the pressure-resistant container is 10/90 to 50/50.

6. The mosquito control aerosol of any one of claims 1 to 5, **characterized in that**
the organic solvent is at least one selected from the group consisting of higher fatty acid esters and alcohols.

7. The mosquito control aerosol of any one of claims 1 to 6, **characterized in that**
the insect pest control component has a vapor pressure of 2 × 10⁻⁴ to 1 × 10⁻² mmHg at 30°C.

8. The mosquito control aerosol of any one of claims 1 to 7, **characterized in that**
when the liquid aerosol-forming material is sprayed into a treatment space once, an effect of the insect pest control component is sustained for 20 hours or more in a space of 33 m³ or less.

9. The mosquito control aerosol of any one of claims 2 to 8, **characterized in that**
when the liquid aerosol-forming material is sprayed into a treatment space once, the proportion of the insect pest control component remaining in the air two hours after the spraying is 0.05 to 5%.

10. The mosquito control aerosol of any one of claims 1 to 9, **characterized in that**
the spray outlet has an inner diameter of 0.2 to 1.0 mm.

11. A mosquito control method for knocking down or killing mosquitoes, **characterized in that** it comprises:
using the mosquito control aerosol of any one of claims 1 to 10 to spray the liquid aerosol-forming material into a treatment space to knock down or kill mosquitoes.

12. The mosquito control method of claim 11, **characterized in that**
the liquid aerosol-forming material is sprayed into the treatment space once every 24 hours.

## Patentansprüche

1. Mückenbekämpfungsaerosol, umfassend:
einen druckfesten Behälter, der mit einem Dosiersprühventil ausgestattet ist, wobei der Behälter ein ein flüssiges Aerosol bildendes Material, das eine Schadinsekt-Steuerungskomponente und ein organisches Lösungsmittel beinhaltet, und ein Treibmittel enthält, und
einen Sprühknopf, der einen Sprühauslass aufweist, der mit dem Dosiersprühventil verbunden ist,
wobei
das Volumen des ein flüssiges Aerosol bildenden Materials, das versprüht wird, wenn der Sprühknopf einmal nach unten gedrückt wird, auf 0,1 bis 0,2 ml eingestellt ist, und die Sprühkraft davon, wie in einem Abstand von 20 cm von dem Sprühauslass bei 25 °C gemessen, auf 7,85 X 10⁻³ bis 4,90 X 10⁻² N (0,8 bis 5,0 g·f) eingestellt ist, und
zumindest ein Teil des ein flüssiges Aerosol bildenden Materials von dem Sprühauslass in der Form von Klebepartikeln (X) versprüht wird, die an einem freiliegenden Teil in einem Behandlungsraum anhaften,
und
die Menge der anhaftenden Klebepartikel (X) 0,01 bis 0,4 mg pro Quadratmeder eines freiliegenden Teils in einem Behandlungsraum ist.

2. Mückenbekämpfungsaerosol nach Anspruch 1, **dadurch gekennzeichnet, dass**
das ein flüssiges Aerosol bildende Material von dem Sprühauslass in der Form von Klebepartikeln (X), die an einem freiliegenden Teil in einem Behandlungsraum anhaften, und suspendierbaren Partikeln (Y) versprüht wird, die in dem Behandlungsraum suspendieren.

3. Mückenbekämpfungsaerosol nach Anspruch 1 oder 2, **dadurch gekennzeichnet, dass**
der Klebepartikel (X) eine Partikelgröße von 20 bis 80 µm aufweist, wie in einem Abstand von 15 cm von dem Sprühauslass bei 25 °C gemessen, wobei die Partikelgröße die d90-Partikelgröße in der kumulativen Volumenverteilung ist.

4. Mückenbekämpfungsaerosol nach den Ansprüchen 2 oder 3, **dadurch gekennzeichnet, dass**
der suspendierbare Partikel (Y) eine Partikelgröße von weniger als 20 µm aufweist, wie in einem Abstand von 15 cm von dem Sprühauslass bei 25 °C gemessen, wobei die Partikelgröße die d90-Partikelgröße in der kumulativen Volumenverteilung ist.

5. Mückenbekämpfungsaerosol nach einem der Ansprüche 1 bis 4, **dadurch gekennzeichnet, dass**
das Volumenverhältnis (a/b) des ein flüssiges Aerosol bildenden Materials (a) und des Treibmittels (b), die in dem druckfesten Behälter platziert sind, 10/90 bis 50/50 ist.

6. Mückenbekämpfungsaerosol nach einem der Ansprüche 1 bis 5, **dadurch gekennzeichnet, dass**
das organische Lösungsmittel mindestens eines ist, das aus der Gruppe ausgewählt ist, bestehend aus höheren Fettsäureestern und Alkoholen.

7. Mückenbekämpfungsaerosol nach einem der Ansprüche 1 bis 6, **dadurch gekennzeichnet, dass**
die Schadinsektsteuerungskomponente bei 30 °C einen Dampfdruck von 2 x 10⁻⁴ bis 1 x 10⁻² mmHg aufweist.

8. Mückenbekämpfungsaerosol nach einem der Ansprüche 1 bis 7, **dadurch gekennzeichnet, dass**,
wenn das ein flüssiges Aerosol bildende Material einmal in einen Behandlungsraum gesprüht wird, eine Wirkung der Schadinsekt-Steuerungskomponente in einem Raum von 33 m³ oder weniger für 20 Stunden oder mehr anhält.

9. Mückenbekämpfungsaerosol nach einem der Ansprüche 2 bis 8, **dadurch gekennzeichnet, dass**,
wenn das ein flüssiges Aerosol bildende Material einmal in einen Behandlungsraum gesprüht wird, der Anteil der Schadinsekt-Steuerungskomponente, der zwei Stunden nach dem Sprühen in der Luft bleibt, 0,05 bis 5 % ist.

10. Mückenbekämpfungsaerosol nach einem der Ansprüche 1 bis 9, **dadurch gekennzeichnet, dass**
der Sprühauslass einen Innendurchmesser von 0,2 bis 1,0 mm aufweist.

11. Mückenbekämpfungsverfahren zum Knock-Down oder Abtöten von Mücken, **dadurch gekennzeichnet, dass** es umfasst:
Verwenden des Mückenbekämpfungsaerosols nach einem der Ansprüche 1 bis 10, um das ein flüssiges Aerosol bildende Material zum Knock-Down oder Abtöten von Mücken in einen Behandlungsraum zu sprühen.

12. Mückenbekämpfungsverfahren nach Anspruch 11, **dadurch gekennzeichnet, dass**
das ein flüssiges Aerosol bildende Material einmal alle 24 Stunden in den Behandlungsraum gesprüht wird.

## Revendications

1. Aérosol anti-moustiques comprenant :
un récipient résistant à la pression équipé d'une vanne de pulvérisation dosée, le récipient contenant un matériau formant un aérosol liquide contenant un composant de lutte contre les insectes nuisibles et un solvant organique, ainsi qu'un propulseur ;
un bouton de vaporisation ayant une sortie de vaporisation connectée à la vanne de pulvérisation dosée,
dans lequel
le volume du matériau formant un aérosol liquide pulvérisé quand le bouton de pulvérisation est enfoncé est ajusté à 0,1 à 0,2 ml, et sa force de pulvérisation, telle que mesurée à une distance de 20 cm par rapport à la sortie de pulvérisation à 25 °C, est ajustée à 7,85 x 10⁻³ à 4,90 x 10⁻² N (0,8 à 5,0 g.f), et
au moins une partie du matériau formant un aérosol liquide est pulvérisé depuis la sortie de pulvérisation sous la forme de particules adhésives (X) qui adhèrent à une partie exposée dans un espace de traitement, et
la quantité des particules adhésives adhérentes (X) est de 0,01 à 0,4 mg par mètre carré de partie exposée dans l'espace de traitement.

2. Aérosol anti-moustiques selon la revendication 1, **caractérisé en ce que**
le matériau formant un aérosol liquide est pulvérisé depuis la sortie de pulvérisation sous la forme de particules adhésives (X) qui adhèrent à une partie exposée dans un espace de traitement et de particules pouvant être mises en suspension (Y) qui sont en suspension dans l'espace de traitement.

3. Aérosol anti-moustiques selon la revendication 1 ou 2, **caractérisé en ce que**
les particules adhésives (X) ont une granulométrie de 20 à 80 µm, telle que mesurée à une distance de 15 cm par rapport à la sortie de pulvérisation à 25 °C, où la granulométrie est la granulométrie d90 dans la distribution cumulative en volume.

4. Aérosol anti-moustiques selon la revendication 2 ou 3, **caractérisé en ce que**
les particules pouvant être mises en suspension (Y) ont une granulométrie inférieure à 20 µm, telle que mesurée à une distance de 15 cm par rapport à la sortie de pulvérisation à 25 °C, où la granulométrie est la granulométrie d90 dans la distribution cumulative en volume.

5. Aérosol anti-moustiques selon l'une quelconque des revendications 1 à 4, **caractérisé en ce que**
le rapport en volume (a/b) du matériau formant un aérosol liquide (a) au propulseur (b) placé dans le récipient résistant à la pression est de 10/90 à 50/50.

6. Aérosol anti-moustiques selon l'une quelconque des revendications 1 à 5, **caractérisé en ce que**
le solvant organique est au moins l'un choisi dans le groupe constitué par les esters d'acide gras supérieur et les alcools.

7. Aérosol anti-moustiques selon l'une quelconque des revendications 1 à 6, **caractérisé en ce que**
le composant de lutte contre les insectes nuisibles a une pression de vapeur de 2 x 10⁻⁴ à 1 x 10⁻² mmHg à 30 °C.

8. Aérosol anti-moustiques selon l'une quelconque des revendications 1 à 7, **caractérisé en ce que**
lorsque le matériau formant un aérosol liquide est pulvérisé dans un espace de traitement une seule fois, l'effet du composant de lutte contre les insectes nuisibles est maintenu pendant 20 heures ou plus dans un espace de 33 m³ ou moins.

9. Aérosol anti-moustiques selon l'une quelconque des revendications 2 à 8, **caractérisé en ce que**
lorsque le matériau formant un aérosol liquide est pulvérisé dans un espace de traitement une seule fois, la proportion du composant de lutte contre les insectes nuisibles restant dans l'air deux heures après la pulvérisation est de 0,05 à 5 %.

10. Aérosol anti-moustiques selon l'une quelconque des revendications 1 à 9, **caractérisé en ce que**
la sortie de pulvérisation a un diamètre interne de 0,2 à 1,0 mm.

11. Méthode de lutte contre les moustiques pour éliminer ou tuer les moustiques, **caractérisée en ce qu'**elle comprend :
l'utilisation de l'aérosol anti-moustiques de l'une quelconque des revendications 1 à 10 pour pulvériser le matériau formant un aérosol liquide dans un espace de traitement pour éliminer ou tuer les moustiques.

12. Méthode de lutte contre les moustiques selon la revendication 11, **caractérisée en ce que**
le matériau formant un aérosol liquide est pulvérisé dans l'espace de traitement une fois toutes les 24 heures.
